# EUROPEAN PATENT APPLICATION

(11) **EP 3 822 547 A1**
(43) Date of publication of application: **19.05.2021**
(21) Application number: 18926189.4
(22) Date of filing: 26.11.2018
(51) Int. Cl.: F24F 1/00, F24F 3/16, F24F 6/04

(54) **AIR CONDITIONER INDOOR UNIT AND CONTROL METHOD**

(30) Priority: 09.07.2018 CN 201810745998
(71) Applicant: Qingdao Haier Air-Conditioning Electronic Co., Ltd, Qingdao, Shandong 266101 (CN); Haier Smart Home Co., Ltd., Qingdao, Shandong 266101 (CN)
(72) Inventor: CAI, Yanfang, Qingdao, Shandong 266101 (CN); ZHANG, Zhongxiao, Qingdao, Shandong 266101 (CN); ZHANG, Wei, Qingdao, Shandong 266101 (CN)
(74) Representative: Byrne, Declan
(86) International application number: PCT/CN2018/117403
(87) International publication number: WO 2020/010780

(57) **Abstract**

Disclosed are an air conditioner indoor unit (P) and a control method therefor. The indoor unit (P) comprises a machine enclosure (1), a humidifying structure (N) and a fresh air structure (M); the humidifying structure (N) includes a water tank (14), a wet film (15) and an electrolytic water device (16); the water tank (14) is placed in a water pan (13), close to an air outlet (1-2), and the water tank (14) is detachably connected with the machine enclosure (1); the wet film (15) and the electrolytic water device (16) are detachably fixed in the water tank (14) respectively; the fresh air structure (M) is disposed at one end of the machine enclosure (1); and a fresh air ventilator (3) and a purifying structure (4) are disposed in a fresh air flue of the fresh air structure (M). According to the present invention, the fresh air function, the humidifying function and the dehumidification function are controlled in a unified way; the operation is simple and convenient, and the comfort level of indoor air can be qualified without manual operation of a user; thus, the user experience is improved.

## Description

### Technical field

The present invention belongs to the technical field of air conditioner, and in particular, relates to an air conditioner indoor unit and a control method.

### Background

Meeting human comfort requirements need that many indoor air parameters satisfy corresponding standards at the same time; those parameters includes temperature, humidity, PM2.5 concentration, formaldehyde concentration, total volatile organic compound concentration (TVOC) and fresh air volume. There is no air purifier, fresh air system, purifier, air conditioner or a device integrated with any two of those functions in the prior art could control all those parameters simultaneously.

The air conditioner control methods of the prior art, although part of them fresh air, humidification and purification functions are integrated, rarely could meet the human comfort requirements. The normal manner relies on a fresh air machine to perform the main function of a fresh air system or on a humidifier to perform the humidification function, but the fresh air machine and the humidifier has their own control method and could not be operated in a uniform way, so it is inconvenient to use.

### Summary

The invention provides an indoor unit of an air conditioner, which realizes a humidification function and a fresh air function, and is convenient in disassembly and assembly of the humidifying structure.

To solve the above technical problems, the present invention is implemented by using the following technical solutions:
An air conditioner indoor unit, characterized in that, includes: a casing, a humidifying structure and a fresh air structure; an air inlet and an air outlet are formed on the casing and an air duct communicating the air inlet with the air outlet is formed within the casing; inside the air duct a fan and a heat exchanger are provided and a water receiving tray is provided below the heat exchanger; wherein the humidifying structure including a water tank, a wet film and a water electrolysis device; wherein the water tank is placed in the water receiving tray close to the air outlet, the water tank is detachably connected to the casing; the wet film and the water electrolysis device are detachably fixed in the water tank respectively; a fresh air port is formed on the casing and communicates with the air duct; the fresh air structure is provided at one end of the casing, which comprises: a cabinet onto which a fresh air inlet and a fresh air outlet are formed and a fresh air duct communicating the fresh air inlet and the fresh air outlet is formed within the cabinet; inside the fresh air duct a fresh air fan and a purification structure are arranged, and the fresh air outlet of the fresh air structure is connected to the fresh air port.

Further, a first maintenance port is formed on the cabinet of the fresh air structure and a first maintenance cover plate is detachably fixed at the cabinet and configured to cover the first maintenance port; the purification structure includes a filter frame and a filter assembly; a slide rail fitted with the filter frame is formed on the cabinet, one end of the slide rail is close to the first maintenance port and the other end of the slide rail is away from the first maintenance port; a limiting hole is opened on the slide rail and a limiting ball fitted with the limiting hole is disposed at a corresponding position at the filter frame; the filter frame and the slide rail are in a sliding connection and the limiting ball is positioned within the limiting hole.

Further, a water inlet hole is opened on the water tank; the water inlet hole is connected to a water inlet pipe; a first solenoid valve is provided on the water inlet pipe and an air conditioner indoor unit controller controls the operation of the first solenoid valve; a drainage hole is opened on a tank bottom wall of the water tank; the drainage hole is connected to the drainage pipe; a second solenoid valve is provided on the drainage pipe and the air conditioner indoor unit controller controls the operation of the second solenoid valve; a water level sensor configured to collect a water level signal of the water tank is provided within the water tank, and the water level signal is sent to the air conditioner indoor unit controller.

The present invention also provides a method for controlling an indoor unit of an air conditioner. wherein the air conditioner indoor unit includes: a casing where an air inlet, an air outlet and a fresh air port are formed, an air duct communicating the air inlet with the air outlet is formed within the casing; a humidifying structure configured to perform a humidification function is provided at the air outlet; a fresh air structure configured to perform a fresh air function is provided at one end of the casing, which comprises: a cabinet onto which a fresh air inlet and a fresh air outlet are formed and a fresh air duct communicating the fresh air inlet and the fresh air outlet is formed within the cabinet; inside the fresh air duct a fresh air fan and a purification structure are arranged, and the fresh air outlet of the fresh air structure is connected to the fresh air port

The control method includes:
obtaining parameters of indoor pollutants;
determining whether each of the parameters of indoor pollutants is greater than a preset permitted threshold;
if yes, turning on a fresh air function until each of the parameters of indoor pollutants is less than or equal to the preset permitted threshold value;
if not, obtaining an indoor carbon dioxide value Q_{indoor} and an outdoor carbon dioxide value Q_{outdoo}; determining whether Q_{indoor}>Q_{outdoor} and Q_{indoor} > a permitted standard setting value Qo;
if yes, turning on a fresh air function until Q_{indoor}≤Q_{outdoo} or Q_{indoor}≤ a permitted standard setting value Qo;
if not, turning off the fresh air function; obtaining indoor air humidity S_{indoor}, and determining whether or not to activate a humidification function or a dehumidification function according to the indoor air humidity S_{indoor};
if S_{indoor}< a preset humidity lower threshold, turning on a humidification function until S_{indoor} ≥ the preset humidity lower threshold, then turning off the humidification function;
if S_{indoor} > a preset humidity upper threshold, turning on a dehumidification function until S_{indoor} ≤ the preset humidity upper threshold, then turning off the dehumidification function;
if the preset humidity lower threshold ≤ S_{indoor} ≤ the preset humidity upper threshold, turning off the humidification function and dehumidification function.

Further, the control method further includes: the fresh air fan includes two modes: a high wind speed mode and a low wind speed mode; if a parameter of indoor pollutants > a first set upper limit value > the preset permitted threshold value, the fresh air function is turned on and the fresh air fan is controlled to operate at the high wind speed mode; if the preset permitted threshold value < a parameter of indoor pollutants ≤ a first set upper limit value, the fresh air fan is controlled to operate at the low wind speed mode.

Further, the control method further includes: when one of the parameters of indoor pollutants is greater than the preset permitted threshold value, generating an exceeding permitted standard reminder; if within a set period of time, the number of the generation of the exceeding permitted standard reminder exceeds a preset number of times, generating a reminder to replace the purification structure.

Further, the indoor carbon dioxide value is obtained by a carbon dioxide sensor arranged at the air inlet of the cabinet and the outdoor carbon dioxide value is obtained by a carbon dioxide sensor arranged on the outdoor unit of the air conditioner; a humidity sensor is arranged at the air inlet of the cabinet to obtain the indoor air humidity.

Further, the parameters of indoor pollutants include a PM2.5 value, a TVOC value or a formaldehyde value which is obtained through detection by an air quality sensor arranged at the air inlet of the cabinet or received from indoor devices.

Further, a button capable of turning on or turning off the fresh air function is provided on a remote controller of the air conditioner and the operation on the button turns on or turns off the fresh air function.

Further, the humidifying structure comprises a water tank and a wet film, wherein the wet film is fixed in the water tank; a water inlet hole is opened on the water tank and is connected to a water inlet pipe and a first solenoid valve is arranged on the water inlet pipe; a water drainage hole is opened on the tank bottom wall of the water tank and is connected to a drainage pipe and a second solenoid valve is arranged on the water drainage pipe; a water level sensor is arranged in the water tank and is configured to collect a water level signal; during the time period when the humidification function is turning on, if the water level in the water tank is less than a preset water level, controlling the first solenoid valve open and filling up water in the water tank until the water level in the water tank amounts to the preset water level, and then closing the first solenoid; when the humidification function is turned off or the dehumidification function is turned on, controlling the second solenoid valve open and drain out the water in the water tank

Compared with the prior art, the advantages and positive effects of the present invention are: the air conditioner indoor unit of the present invention realizes a humidification function and a fresh air function addition to the original cooling and heating functions of the air conditioner indoor unit by providing a humidifying structure and a fresh air structure. Moreover, the entire humidifying structure is easy to disassemble and easy to repair and replace. The method for controlling an indoor unit of an air conditioner of the present invention realizes unified control of fresh air function, humidification function, and dehumidification function. The control is simple, convenient, and easy to use. The user does not need manual operation to make the indoor air comfort meet the requirements and improve the user experience.

### Brief Description of the Drawings

Fig. 1 is a schematic structural diagram of an air conditioner indoor unit according to one aspect of the present invention;
Fig. 2 is a schematic structural diagram of an air conditioner indoor unit shown in Fig. 1 without a fresh air structure;
Fig. 3 is an exploded view of Fig. 2;
Fig. 4 is a schematic diagram of the fresh air structure shown in Fig. 1;
Fig. 5 is a sectional view of Fig. 4;
Fig. 6 is a schematic diagram in which a purification structure is connected to one of U-shape grooves shown in Fig. 4;
Fig. 7 is an enlarged schematic view of Section A in Fig. 6;
Fig. 8 is an enlarged schematic view of Section B in Fig. 6;
Fig. 9 is a schematic structural diagram of the purification structure shown in Fig. 4;
Fig. 10 is a schematic structural diagram of an air conditioner indoor unit shown in Fig. 1 without a fresh air structure;
Fig. 11 is a sectional view of Fig. 10;
Fig. 12 is a schematic structural diagram of a humidifying structure in Fig. 10;
Fig. 13 is a schematic structural diagram of a water tank in Fig. 12;
Fig. 14 is a flowchart showing an air conditioner indoor unit control method according to one aspect of the present invention;

Reference numbers:
P: Air Conditioner Indoor Unit; 1: Casing; 1-1: Air Inlet; 1-2: Air Outlet; 1-3: Fresh Air Port; M: Fresh Air Structure; 2: Cabinet; 2-1: Fresh Air Inlet; 2-2: Fresh Air Outlet; 3: Fresh Air Fan; 4: Purification Structure; 4-1: Filter Frame; 4-1-1: Limiting Ball; 4-1-2, Handle; 4-2: Filter Assembly; 4-2-1: PM2.5 Filter; 4-2-2: Formaldehyde Filter; 4-2-3: HEAP Filter; 5: Slide Rail; 5-1: Side Wall; 5-1-1: Limiting Hole; 5-2: Side Wall; 5-3: Bottom Wall; 6: First Maintenance Cover; 7: Second Maintenance Cover; 8: Fresh Air Fan Bracket; 9: Bracket Fixing Bolts; 10: Plastic Bolt; N: Humidifying Structure;11: Fan; 12: Heat Exchanger; 13: Water Receiving Tray; 14: Water Tank; 14-1: Tank Front Wall; 14-1-1: Through Hole; 14-2: Tank Rear Wall; 14-3: Tank Left Wall; 14-4: Tank Right Wall; 14-4-1: Water Inlet; 14-5: Tank Bottom Wall; 14-6: First Buckle; 14-7: First Buckle; 14-8: Second Buckle; 14-8-1: Sub Clip; 14-9: Fixing Post; 14-10: Fixing Post; 14-11: Mounting Screw; 14-12: Baffle; 14-13: Baffle; 15: Wet Film; 16: Water Electrolysis Device; 17: Water Inlet Pipe; 18: The First Solenoid Valve.

### Detailed Description of the Embodiments

The specific embodiments of the present invention will be further described in detail below with reference to the accompanying drawings.

The present invention aims at providing an air conditioner indoor unit and an air conditioner indoor unit control method; both of them have a cooling function, a heating function, a humidification function and a fresh air function; wherein the humidification function and the fresh air function are uniformly controlled. Hereinafter, the air conditioner indoor unit and the control method of the air conditioner indoor unit will be described in detail.

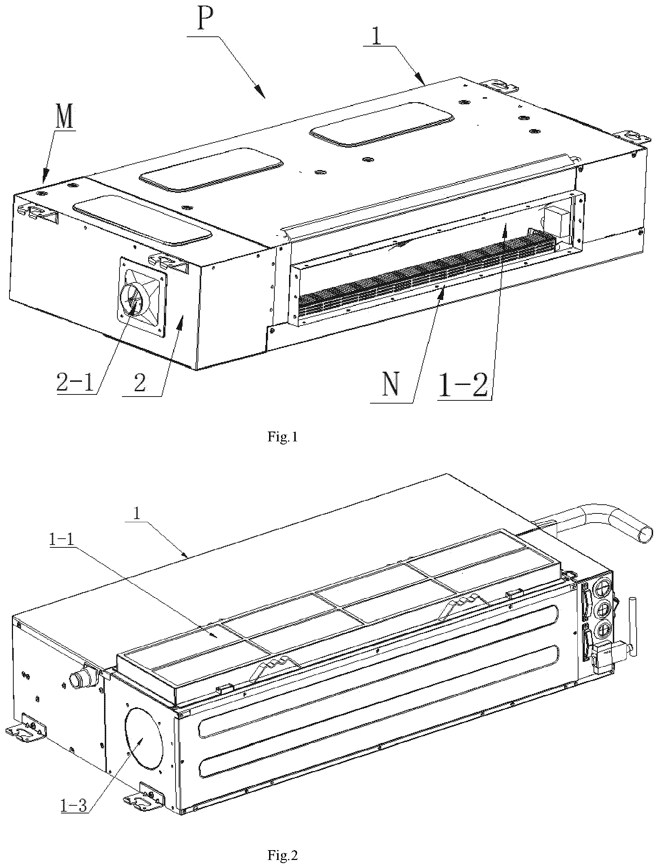

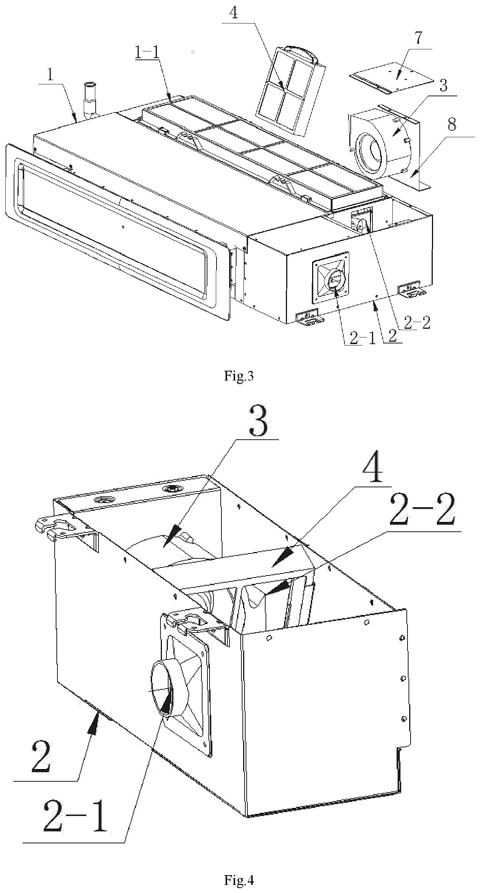

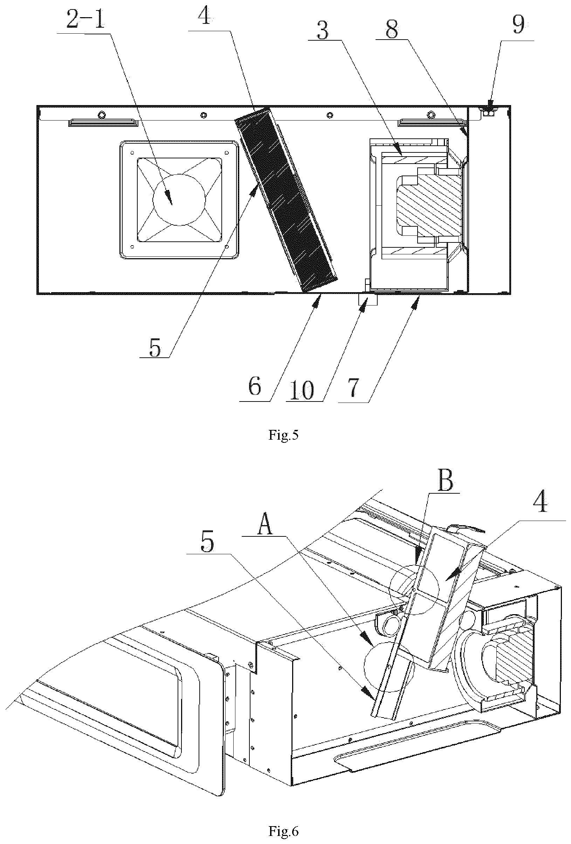

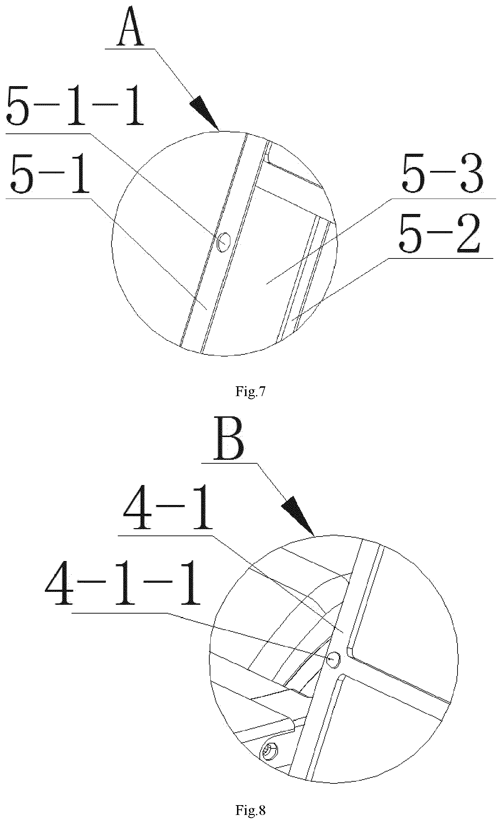

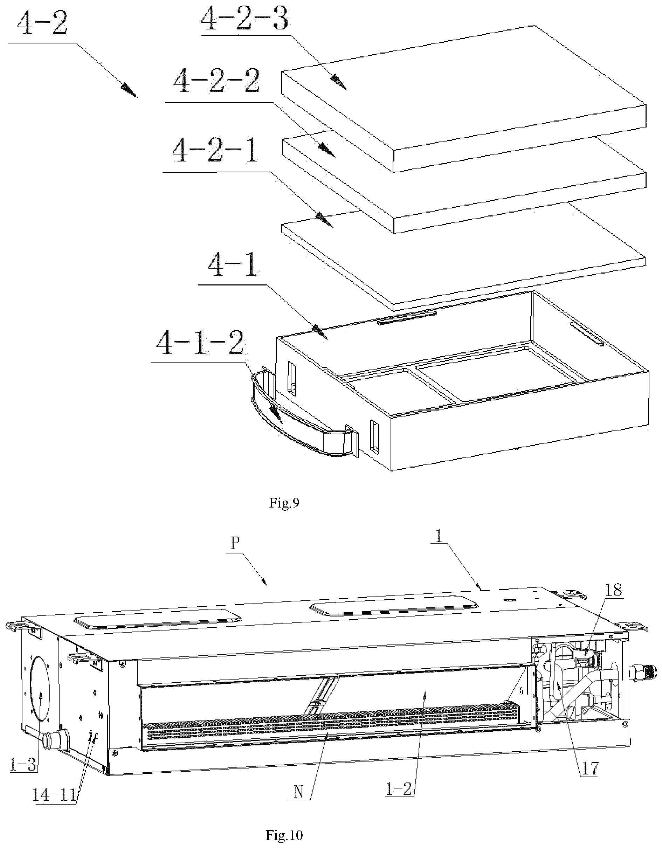

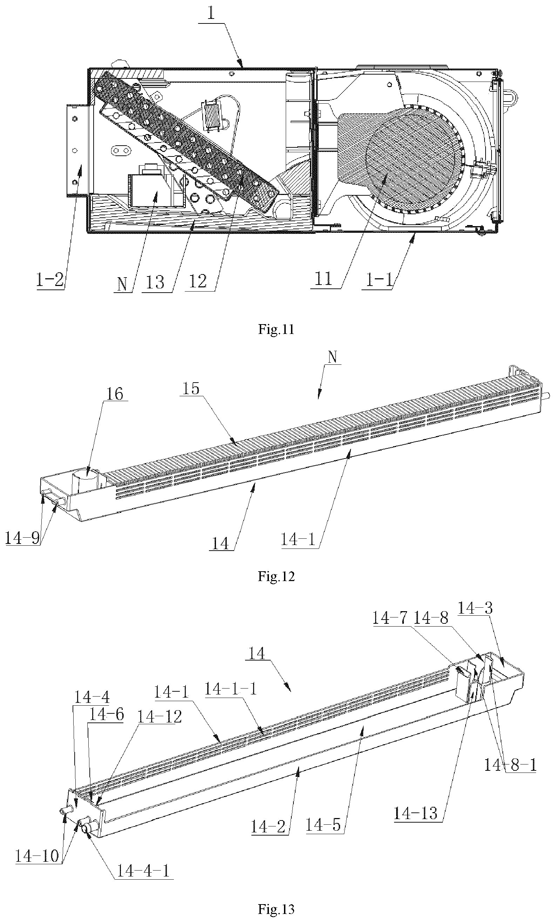

An air conditioner indoor unit P disclosed by the present invention mainly includes: a casing 1, a humidifying structure N and a fresh air structure M; an air inlet 1-1 and an air outlet 1-2 are formed on the casing 1 and an air duct communicating the air inlet 1-1 with the air outlet 1-2 is formed within the casing 1; inside the air duct a fan 11 and a heat exchanger 12 are provided, wherein the heat exchanger 12 is located close to the air outlet 1-2 and the fan 11 is disposed between the heat exchanger 12 and the air inlet 1-1, a water receiving tray 13 is provided below the heat exchanger 12; the humidifying structure N is provided at the air outlet 1-2 to realize the humidification function; the humidifying structure N includes a water tank 14, a wet film 15 and a water electrolysis device 16; the water tank 14 is placed in the water receiving tray 13 close to the air outlet 1-2, the water tank 14 is detachably connected to the casing 1; the wet film 15 and the water electrolysis device 16 are detachably fixed in the water tank14 respectively, shown in Fig.1 to Fig.13.

A fresh air port 1-3 is also formed on the casing 1 and communicates with the air duct; the fresh air structure M is provided at one end of the casing 1 to realize the fresh air function. The fresh air structure M mainly includes a cabinet 2 onto which a fresh air inlet 2-1 and a fresh air outlet 2-2 are formed, and a fresh air duct communicating the fresh air inlet 2-1 with the fresh air outlet 2-2 is formed in the cabinet 2; inside the fresh air duct a fresh air fan 3 and a purification structure 4 are arranged; the fresh air outlet 2-2 of the fresh air structure M is connected to the fresh air port 1-3.

The air conditioner indoor unit disclosed by the present embodiment is provided with the humidifying structure and the fresh air structure so as to enable a traditional heating and cooling air conditioner to have additional humidification function and fresh air function.

In the present embodiment, the casing 1 is a square box, the air inlet 1-1 is located on a bottom wall of the casing 1, the air outlet 1-2 is located on a front wall of the casing 1, and the fresh air port 1-3 is located on a left wall of the casing 1 (or on a right wall of the casing 1).

When the air conditioner indoor unit is running, airflow in the air duct flows through the humidifying structure N and is humidified by the wet film 15, the wetted air enters in to the room through the air outlet 1-2 to meet the user's humidification needs.

In the air conditioner indoor unit P disclosed by the present embodiment, the wet film 15 is used to humidify the airflow and achieve the humidification function. The wet film 15 is clean, free of white power, high in saturation efficiency, economical, applicable and cost-effective; during an isenthalpic humidification process, hot airflow passes through a moist wet film 15, the humidity of hot air increases and the temperature of hot air decreases while water on the wet film 15 is evaporated without consuming extra energy; water in the water tank 14 is ionized to obtain electric ions for sterilization and deodorization so as to keep water in the water tank 14 clean and hygienic, no manual sterilization treatment is required, which is convenient to use; moreover, electric ions in the water tank 14 absorbed by the wet film 15 could enable the air passing through the wet film 15 to be sterilized and deodorized, so as to make the humidified air clean and healthy ; the wet film 15 and the water electrolysis device 16 are detachably fixed in the water tank 14, which could be easily disassembled or assembled, so as to facilitate the maintenance and replacement of the wet film 15 and the water electrolysis device 16; the water tank 14 and the casing 1 are detachably connected which could facilitate the disassembly, and the repair and replacement of the water tank 14. Therefore, the entire humidifying structure is convenient for disassembly, repair and replacement; the wet film 15 and the electrolytic water device 16 are placed in the water tank 14, and the water tank 14 is placed in the water receiving tray 13, the whole humidification structure does not take up extra space; with these arrangements, those air conditioner without humidifying function could add a humidifying structure after manufacture. The water tank 14 is placed in the water receiving tray 13 below the heat exchanger 12 so that part of condensed water could be recovered to improve the humidification efficiency of the wet film 15; additionally, if water in the water tank 14 overflows, the overflowed water could directly flow into the water receiving tray 13 to avoid flowing into the air duct to damage other components and improve the safety as humidifying.

The assembly process of the humidifying structure N comprises: firstly assembling the wet film 15 and the water electrolysis device 16 on the water tank 14, then placing the water tank 14 in the water receiving tray 13 and assembling them together on the casing 1; during maintenance, firstly removing the entire humidifying structure N and then repairing it, the entire humidifying structure is easy to disassemble and maintain. That is to say, the humidifying structure N is assembled in advance, and then assembled into the water receiving tray 13 close to the air outlet 1-2. If the humidifying structure N has a failure in using, it could be disassembled for repair or replacement entirely.

If a user has an air conditioner indoor unit without a humidification function, the humidifying structure could be added on when there is a humidification requirement. The humidifying structure could be installed in the water receiving tray close to the air outlet so as to add a humidification function to the traditional air conditioner indoor unit, which is convenient to transform and construct, low in cost and easy for operation. With the humidifying structure installed in the water receiving tray close to the air outlet, those air conditioner indoor unit without a humidification function could realize a humidification function by adding the humidifying structure.

The water electrolysis device 16 includes a waterproof case, a power supply, a positive electrode, and a negative electrode. The power supply is located inside the waterproof case, and the positive electrode and the negative electrode are located outside the waterproof case. The positive electrode and the negative electrode are arranged in parallel and spaced apart. The positive electrode connects to a positive pole of the power supply via a switch, and the negative electrode connects to a negative pole of the power supply via a switch. The positive electrode and the negative electrode are immersed in the water in the water tank 14. When the positive electrode and the negative electrode are energized, an electric field is formed between the two and the water in the water tank 14 is ionized to obtain electric ions, so that the water in the water tank 14 is sterilized and deodorized.

First buckle fitted with the wet film 15 is formed at one or both ends of the water tank 14, and the first buckle and the wet film 15 are detachably engaged together. In the present embodiment, a first buckle 14-7 is provided at one end of the water tank 14 and is connected to one end of the wet film 15; a first buckle 14-6 is provided at the other end of the water tank 14 and connected to the other end of the wet film 15. With the arrangements of the first buckles described above, a stable and reliable connection between the wet film 15 and the water tank 14 is achieved, which is easy to disassemble and could facilitate the maintenance and replacement of the wet film 15; moreover, the structure is simple, convenient to implement, and low in cost.

Second buckle 14-8 fitted with the water electrolysis device 16 is formed at one end of the water tank 14, and the second buckle 14-8 is detachably snapped with the water electrolysis device 16, thereby realizing a stable and reliable connection between the water electrolysis device 16 and the water tank 14, which is easy to disassemble and install, convenient to repair and replace the water electrolysis device 16; moreover, it is simple in structure, easy for implementation and low in cost.

In the present embodiment, the second buckle 14-8 includes a plurality of sub clips 14-8-1, and the sub clips 14-8-1 are arranged around the water electrolysis device 16 and are detachable from the water electrolysis device 16 respectively. The sub clips 14-8-1 could further improve the stability and reliability of the connection between the water electrolysis device 16 and the water tank 14, so as to facilitate disassembly and assembly, which is easy for maintenance and replacement of the water electrolysis device 16; moreover, they are simple in structure, easy to implement, and low in cost.

Fixing posts are formed at both ends of the water tank 14, and mounting holes are formed at corresponding positions of the casing 1. The fixing posts and the mounting holes are in one-to-one correspondence, and mounting screws are connected to the corresponding fixing posts through the mounting holes. Specifically, a fixing post 14-9 is formed at one end of the water tank 14, a fixing post 14-10 is formed at the other end of the water tank 14, and mounting screw 14-11 are connected to the fixing post 14-9 through a corresponding mounting hole; another mounting screw (not shown in the figures) is connected to the fixing post 14-10 through a corresponding mounting hole. The mounting screws are loosened when the water tank 14 needs to be removed. By arranging the above-mentioned fixing posts, mounting holes, and mounting screws, the stable and reliable connection of the water tank 14 and the casing 1 is achieved, the assembly and disassembly are facilitated, the maintenance and replacement of the water tank 14 are also facilitated; moreover, the structure is simple, convenient to implement, and low in cost.

In the present embodiment, the water tank 14 includes a tank front wall 14-1, a tank rear wall 14-2, a tank left wall 14-3, a tank right wall 14-4, and a tank bottom wall 14-5; the tank front wall 14-1 is closer to the air outlet 1-2 than the tank rear wall 14-2, that is to say, the tank front wall 14-1 is close to the air outlet 1-2, and the tank rear wall 14-2 is away from the air outlet 1-2. The height of the tank rear wall 14-2 is half of the height of the tank front wall 14-1, a plurality of through holes 14-1-1 are formed at an upper half portion of the tank front wall 14-1; the bottom of the wet film 15 abuts on the tank bottom wall 14-5 of the water tank so as to draw the water in the water tank 14, the height of the wet film 15 is higher than the height of the tank front wall 14-1. Under the action of the fan 11, the airflow in the air duct flows through the through holes 14-1-1 of the tank rear wall 14-2, the wet film 15, and the tank front wall 14-1 in order, and then enters the room through the air outlet 1-2.

Since the height of the wet film 15 is higher than the height of the tank front wall 14-1, the height of the tank rear wall 14-2 is half of the height of the tank front wall 14-1, and the through holes 14-1-1 are formed in the upper half portion of the tank front wall 14-1, so that as much airflow as possible can flow through the wet film 15 to minimize the effect on the humidification due to the airflow shielding by the tank front wall 14-1 and the tank rear wall 14-2 .

Baffle for stopping the wet film 15 is arranged at both ends of the water tank 14 near the tank rear wall 14-2. Specifically, a baffle 14-13 is arranged at one end of the water tank 14 near the tank rear wall 14-2, and is used to stop one end of the wet film 15; a baffle 14-12 is arranged at the other end of the water tank 14 close to the tank rear wall 14-2, and is used to stop the other end of the wet film 15; the baffle 14-12 and the baffle 14-13 are used to stop the wet film 15 from tilting toward the tank rear wall 14-2, so as to avoid the wet film 15 to fall from the tank rear wall 14-2 due to the height of the tank rear wall 14-2 is too low.

In the present embodiment, each through hole 14-1-1 is in an elongated shape, and multiple through holes are arranged in multiple rows and columns, which not only simplifies the manufacture and facilitates processing, but also allows as much airflow as possible to pass through. More air passes the tank front wall 14-1 could improve the uniformity of the air flow after humidification and the humidification effect.

In order to facilitate to add water into the water tank 14, a water inlet hole 14-4-1 is also opened on the water tank 14 (such as on tank right wall 14-4). The water inlet hole 14-4-1 is connected to a water inlet pipe 17, and the water inlet pipe 17 is connected to an external water source, and a first solenoid valve 18 is provided on the water inlet pipe 17, and an air conditioner indoor unit controller controls the operation of the first solenoid valve 18. The air conditioner indoor unit controller controls the opening of the first solenoid valve 18, thereby controlling the flow of water in the water inlet pipe 17, and then controlling the amount of water entering the water tank 14, so as to automatically add water into the water tank 14 to avoid users from manually adding water, which is convenient to use. When the water tank 14 needs to be filled up with water, the air conditioner indoor unit controller controls the first solenoid valve 18 to open and fills up the water tank 14 with water.

In order to facilitate the drainage of water in the water tank 14, a drainage hole is also opened on tank bottom wall 14-5, the drainage hole is connected to the drainage pipe, a second solenoid valve is provided on the drainage pipe, and the air conditioner indoor unit controller controls the operation of the second solenoid valve.

In order to maintain the water level in the water tank 14 at a reasonable level, a water level sensor is also provided in the water tank 14. The water level sensor collects a water level signal and sends it to the air conditioner indoor unit controller. The air conditioner indoor unit controller controls the operation of the first solenoid valve 18 according to the received water level signal

The specific structure of the fresh air structure M will be described in detail below.

The fresh air structure M mainly includes a cabinet 2. The fresh air inlet 2-1, the fresh air outlet 2-2, and a first maintenance port are formed on the cabinet 2. A fresh air duct communicating the fresh air inlet 2-1 with the fresh air outlet 2-2 is formed inside the cabinet 2; a first maintenance cover plate 6 is detachably fixed at the first maintenance port on the cabinet 2, the first maintenance cover plate 6 is used to cover the first maintenance port; the fresh air fan 3 and the purification structure 4 are arranged in the fresh air duct, and the air outlet of the fresh air fan 3 is connected to the fresh air outlet 2-2; the purification structure 4 includes a filter frame 4-1 and a filter assembly 4-2 fixed in the filter frame 4-1; a slide rail 5 fitted with the filter frame 4-1 is formed on the cabinet 2. One end of the slide rail 5 is close to the first maintenance port, and the other end of the slide rail 5 is away from the first maintenance port. A limited hole 5-1-1 is formed on the slide rail 5, and a limiting ball 4-1-1 fitted with the limiting hole 5-1-1 is formed at a corresponding position at the filter frame 4-1; the filter frame 4-1 and the slide rail 5 are in a sliding connection, the limiting ball 4-1-1 is positioned within the limiting hole 5-1-1, shown in Fig. 1 to Fig. 9.

In the fresh air structure disclosed by the present embodiment, the filter frame 4-1 slides along the slide rail 5. If the entire filter frame 4-1 is located in the fresh air duct, the limiting ball 4-1-1 is positioned within the limiting hole 5-1-1, accordingly a stable and reliable connection between the filter frame 4-1 and the slide rail 5 is achieved, and a reliable connection between the purification structure 4 and the slide rail 5 is achieved.

When the purification structure 4 needs to be repaired, the first maintenance cover 6 is removed to expose the first maintenance port, and the purification structure 4 is being pulled hard to make the limiting ball 4-1-1 separate from the limiting hole 5-1-1 and the purification structure 4 slides along the slide rail 5 and the purification structure 4 could be pulled out from the first maintenance port.

After the maintenance, the purification structure 4 is placed on the guide rail 5 and the purification structure 4 is being pushed to slide along the slide rail 5. When the limiting ball 4-1-1 is positioned within the limiting hole 5-1-1, the purification structure 4 is stably fixed on the slide rail 5.

In the fresh air structure M and the air conditioner indoor unit P of the present embodiment, a first maintenance cover 6 is detachably fixed to the cabinet 2, and a slide rail 5 fitted with the filter frame 4-1 is formed on the cabinet 2. The filter frame 4-1 and the slide rail 5 are in sliding connection, and the limiting ball 4-1-1 is positioned within the limiting hole 5-1-1 to achieve a stable and reliable connection between the purification structure 4 and the slide rail 5; if the purification structure 4 is needed for maintenance, the first maintenance cover 6 is removed, and the purification structure 4 could be pulled out from the first maintenance port. The fresh air structure and the air conditioner indoor unit in the present embodiment have a simple structure and low cost. The stable and reliable connection of the purification structure 4 and the slide rail 5 is realized, and the disassembly of the purification structure 4 and the slide rail 5 is facilitated. The removal and installation of the purification structure 4 and the slide rail 5 are convenient, and the problem of inconvenient disassembly and installation of the purification structure 4 is solved, which is convenient. The cleaning and replacement of the purification structure 4 saves time and labor, reduces difficulty and cost of disassembly and maintenance costs.

If a user has an air conditioner indoor unit without a fresh air function, the fresh air structure M could be added on when there is a fresh air requirement. When the original air conditioner indoor unit needs to be installed with a fresh air structure M, a fresh air outlet is opened on the housing of the original air conditioner indoor unit, and the fresh air structure M is fixed at one end of the original air conditioner indoor unit casing, so that the fresh air outlet 2-2 of the fresh air structure M is connected with the fresh air outlet on the casing of the original air conditioner indoor unit, and the fresh air function can be realized on the original air conditioner indoor unit. Moreover, it is convenient to transform, easy to construct, low in cost, and convenient for users.

The fresh air structure M is installed at one end of the original air conditioner indoor unit casing. Only if the original air conditioner indoor unit has enough internal space, the fresh air structure could be added on to realize a fresh air function. The fresh air structure M is provided with a purification structure 4, which can be easily disassembled for cleaning, maintenance and replacement.

The first maintenance cover 6 is detachably fixed to the cabinet 2 at the first maintenance port by a plastic bolt 10, which is convenient for disassembly, simple structure and low cost.

In the present embodiment, the filter frame 4-1 is a square frame; the slide rail 5 includes two U-shaped grooves and the groove openings of the two U-shaped grooves are facing with each other; the U-shaped groove includes a side wall 5-1, a side wall 5-2, and a bottom wall 5-3, the groove width of each U-shaped groove is the distance between the two side walls; the groove width of the U-shaped groove matches with the thickness of the filter frame 4-1, and the distance between the bottom walls of the U-shaped grooves is fitted with the width of the filter frame 4-1; the side wall 5-1 of the U-shaped groove is formed with the aforementioned limiting hole 5-1-1. The limiting ball 4-1-1 fitted with the limiting hole 5-1-1 is formed at a corresponding position on the filter frame 4-1; the limiting balls 4-1-1 on the filter frame 4-1 and the limiting holes 5-1-1 on the slide rail 5 are in one-to-one correspondence. The two sides of the filter frame 4-1 are correspondingly in sliding connection with the two U-shaped grooves, and each limiting balls 4-1-1 are positioned within a corresponding limiting hole 5-1-1. By the arrangement of the slide rail 5, the stable and reliable connection between the purification structure 4 and the slide rail 5 is realized, and the disassembly of the purification structure 4 and the slide rail 5 is facilitated. The structure is simple, the cost is low, and it is easy to implement.

In the present embodiment, the diameter of the limiting hole 5-1-1 is smaller than the diameter of the limiting ball 4-1-1, the limiting ball 4-1-1 is a small hemisphere, and the limiting ball 4-1-1 is a plastic piece. The diameter of the limiting hole 5-1-1 is smaller than the diameter of the limiting ball 4-1-1 to prevent the limiting ball 4-1-1 from completely entering the limiting hole 5-1-1, so as to avoid the failure that the limiting ball 4-1-1 could not be separated from the limiting hole 5-1-1 as pulling out the filter frame 4-1. The limiting ball 4-1-1 is a plastic piece, which is elastic and could be slightly squeezed and deformed. During the sliding movement of the filter frame 4-1, the limiting ball 4-1-1 cooperates with the slide rail 5 in an interference fit. If the limiting ball 4-1-1 is designed as a large hemisphere or a large sphere, the sliding resistance of the filter frame 4-1 when sliding on the slide rail 5 is increased, so the limiting ball 4-1-1 is designed as a small hemisphere with a spherical surface facing outward. When the filter frame 4-1 slides on the slide rail 5, the limiting ball 4-1-1 is deformed by compression and forms an interference fit with the side wall 5-1 of the U-shaped groove. When the limiting ball 4-1-1 slides to the limiting hole 5-1-1, the limiting ball 4-1-1 returns to its original state and is positioned with the limiting hole 5-1-1.

The slide rail 5 is a sheet metal part, which has low cost and long service life.

In the present embodiment, the filter frame 4-1 is arranged obliquely with respect to the horizontal plane to increase the area where air passing through on the purification structure 4 and improve the purification effect.

The fresh air fan 3 is fixedly connected to the fresh air fan bracket 8. The fresh air fan bracket 8 is detachably fixed to the cabinet 2 for easy disassembly. A second maintenance port is also formed on the cabinet 2 close to the fresh air fan 3. A second maintenance cover plate 7 is detachably fixed at the second maintenance port. The second maintenance cover plate 7 is used to cover the second maintenance port. The fresh air fan 3 and the fresh air fan bracket 8 are pre-assembled, and then assembled to the cabinet 2 as a whole. If the fresh air fan 3 fails, the fresh air fan 3 and the fresh air fan bracket 8 can be disassembled for repair or replacement.

When the fresh air fan 3 needs to be repaired, the second repair cover 7 is removed from the cabinet 2 to expose the second maintenance port, the fresh air fan bracket 8 is removed from the cabinet 2; the fresh air fan bracket 8 with the he fresh air fan 3 could be taken out from the second maintenance port as a whole; the repaired fresh air fan 3 which is arranged on the fresh air fan bracket 8 could be put back into the fresh air duct, and the fresh air fan bracket 8 is fixed on the cabinet 2 and the second maintenance cover plate 7 is then fixed on the cabinet 2. With the arrangements of the fresh air fan bracket 8, the second maintenance port, and the second maintenance cover 7, the maintenance of the fresh air fan 3 is facilitated.

The second maintenance cover plate 7 is detachably fixed to the cabinet 2 at the second maintenance port by bolts, which is convenient for disassembly, simple structure and low cost. The fresh air fan bracket 8 is detachably fixed to the cabinet 2 through bracket fixing bolts 9, which is convenient for disassembly, simple structure and low cost.

In order to facilitate the pulling and pushing of the purification structure 4, a handle 4-1-2 is provided on the filter frame 4-1, which is convenient for users to hold, saves time and effort, and facilitates the installation and removal of the purification structure 4.

The filter assembly 4-2 includes a PM2.5 filter 4-2-1, a formaldehyde filter 4-2-2 and a HEAP filter 4-2-3, wherein the PM2.5 filter 4-2-1 is closest to the fresh air inlet 2-1, and the HEAP filter 4-2-3 is the farthest from the fresh air inlet 2-1. The PM2.5 filter 4-2-1 is used to filter PM2.5, the formaldehyde filter 4-2-2 is used to filter formaldehyde, and the HEAP filter 4-2-3 is used to filter particles. The filter assembly 4-2 could ensure that clean, sterile and healthy fresh air to enter the room. A TVOC filter also could be provided in the filter assembly 4-2 for filtering out VOC and TVOC.

In the present embodiment, the cabinet 2 is a square case, the fresh air inlet 2-1 and the fresh air outlet 2-2 are located on two opposite side walls of the cabinet 2, and the central axis of the fresh air inlet 2-1 and that of the fresh air outlet 2-2 are not coincident, so as to prevent outdoor fresh air without passing through the purification structure 4 from flowing from the fresh air inlet 2-1 into the fresh air duct and directly flowing out of the fresh air outlet 2-2. Under the action of the fresh air fan 3, the fresh air enters the fresh air duct from the fresh air inlet 2-1, flows through the purification structure 4 and the fresh air fan 3, and then flows out from the fresh air outlet 2-2 to the air duct of the air conditioner indoor unit P.

In order to further facilitate the maintenance of the purification structure 4 and the fresh air fan 3, the first maintenance port and the second maintenance port are both located on the bottom wall of the cabinet 2.

The air conditioner indoor unit P of the present embodiment realizes the integration of the humidification function, the fresh air function, and the air-conditioning cooling and heating function, which is convenient for users to install and maintain, and also reduces the economic burden. The purification structure 4 is designed on the fresh air structure M, so that the fresh air entering the room is cleaner and healthier; the purification structure 4 is easy to disassemble, repair and replace which saves time and effort. Users who have an original air conditioner indoor unit could add a fresh air structure if the internal space of the original air conditioner indoor unit permits. The modular design of the fresh air structure greatly improves the versatility of product upgrades, and also leaves a lot of upgrade room for users in the future. The humidifying structure N is easy to disassemble, easy to repair and replace which saves time and effort and reduces user replacement workload in the future. Users who have an original air conditioner indoor unit could also add a humidifying structure. The modular design of the humidifying structure greatly improves the versatility of product upgrades, and also leaves a lot of upgrade room for users in the future.

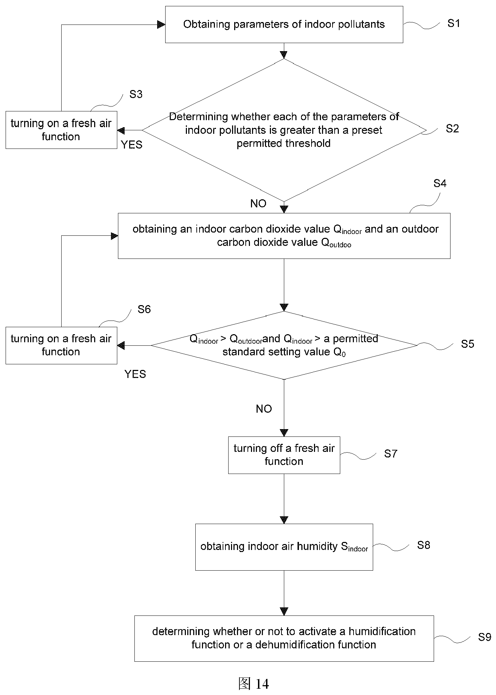

Based on the design of the air conditioner indoor unit described above, the present embodiment also proposes a method for controlling an air conditioner indoor unit, which mainly includes the following steps, as shown in FIG. 14.

Step S1: Obtaining parameters of indoor pollutants.

In the present embodiment, parameters of indoor pollutants include a PM2.5 value, a TVOC value, a formaldehyde value and the like. It is not limited to the above examples. The user can set the parameter values to be detected according to the actual needs and the environment, so as to control the indoor air quality.

The parameters of indoor pollutants could be obtained through detection by an air quality sensor arranged at the air inlet of the cabinet, so as to obtain accurate values in time; or could be directly received from other indoor devices. The reasonable usage of detection result from other indoor devices could achieve resource sharing without adding sensors on air-conditioned indoor units. Step S2: Determining whether each of the parameters of indoor pollutants is greater than a preset permitted threshold.

If yes, that is to say, one or more of the parameters of indoor pollutants is greater than a corresponding preset permitted threshold value, the parameters of indoor pollutants do not meet a preset permitted standard, and executing step S3: turning on a fresh air function until the selected one or more parameters of indoor pollutants is less than or equal to the preset permitted threshold value.

When one of the parameters of indoor pollutants is greater than a preset permitted threshold value, an exceeding permitted standard reminder could be generated (for example, in a voice signal form), which is used to remind the user so that the user could know the indoor environmental situation in time. If within a set period of time (such as 10 minutes), the number of the generation of the exceeding permitted standard reminder exceeds a preset number of times (such as 10 times), which indicates that the effect of the purification structure could not satisfy the purification requirement and purification structure needs to be replaced; the user is being reminded for the replacement of the purification structure (for example, in a voice signal form). The timely replacement of the purification structure could prevent unclean fresh air from entering the room and aggravate indoor pollution. If only a PM2.5 value is included in the parameters of indoor pollutants, the preset permitted threshold is a preset PM2.5 threshold; if only a TVOC value is included in the parameters of indoor pollutants, the preset permitted threshold is a preset TVOC threshold; if only a formaldehyde value is included in the parameters of indoor pollutants, the preset permitted threshold is a preset formaldehyde threshold. The preset permitted thresholds could be selected according to the parameters of indoor pollutants required to be detected, and the users are allowed to adjust the preset permitted thresholds; for example, higher preset permitted thresholds could be set for meeting the requirements of seniors and children who typically need a more comfortable indoor environment.

If not, that is to say, each of the parameters of indoor pollutants is less than or equal to the preset permitted threshold, performing step S4.

Step S4: obtaining an indoor carbon dioxide value Q_{indoor} and an outdoor carbon dioxide value Q_{outdoo}.

The indoor carbon dioxide value is obtained through a carbon dioxide sensor arranged at the air inlet of the cabinet, so as to obtain an accurate indoor carbon dioxide value. The outdoor carbon dioxide value is obtained by a carbon dioxide sensor arranged on the outdoor unit of the air conditioner, so as to obtain an accurate outdoor carbon dioxide value.

Step S5: determining whether Q_{indoor}>Q_{outdoor} and Q_{indoor} > a permitted standard setting value Qo.

If yes, performing step S6: turning on a fresh air function until Q_{indoor} ≤ Q_{outdoo} or Q_{indoor} ≤ a permitted standard setting value Qo.

If not, performing step S7: turning off the fresh air function; then, performing step S8.

Sometimes the outdoor air condition is worse than the indoor air condition so the fresh air function could not properly work and should be turn off, otherwise the indoor air condition might be deteriorated further. Hence once the indoor carbon dioxide value Q_{indoor} beyond a permitted standard value, it should compare the indoor carbon dioxide value Q_{indoor} with the outdoor carbon dioxide value Q_{outdoo} at first, then determining whether the fresh air function could be activated. In the present invention, both of the indoor carbon dioxide value Q_{indoor} and the outdoor carbon dioxide value Q_{outdoo} are carbon dioxide concentration and the permitted standard setting value Q₀ is equal to 1000 PPM.

Step S8: obtaining indoor air humidity S_{indoor}.

A humidity sensor is arranged at the air inlet of the cabinet to obtain the indoor air humidity, so as to obtain the accurate indoor air humidity value in time.

Step S9: determining whether or not to activate a humidification function or a dehumidification function according to the indoor air humidity S_{indoor}.

If S_{indoor}< a preset humidity lower threshold, it indicates that the real-time humidity is low and the humidification function is activated until S_{indoor} ≥ the preset humidity lower threshold; then the humidification function is turned off. The humidification function is typically used in winter as heating due to the low humidity level in winter.

If S_{indoor} > a preset humidity upper threshold, it indicates that the real-time humidity is high and the dehumidification function is activated until S_{indoor} ≤ the preset humidity upper threshold; then the dehumidification function is turned off. The dehumidification function is typically used in summer due to the high humidity level in summer. The operation of dehumidification function is largely similar with those in cooling operation and the only difference is that the fan 11 running at a slower speed.

If the preset humidity lower threshold ≤ S_{indoor} ≤ the preset humidity upper threshold, both of the humidification function and dehumidification function are turned off.

If the preset humidity lower threshold ≤ S_{indoor} ≤ the preset humidity upper threshold, step S1 to S9 are executed again.

In the air conditioner indoor unit control method according to the present embodiment, when each of the parameters of indoor pollutants is greater than a preset permitted threshold, the fresh air function is turned on and the outdoor fresh air is allowed to enter the room until each of the parameters of indoor pollutants is less than or equal to the preset permitted threshold value; when each of the parameters of indoor pollutants is less than or equal to the preset permitted threshold, determining whether Q_{indoor} > Q_{outdoor} and Q_{indoor} > a permitted standard setting value Qo; if yes, turning on a fresh air function and the outdoor fresh air is allowed to enter the room until Q_{indoor} ≤ Q_{outdoo} or Q_{indoor} ≤ a permitted standard setting value Qo; if not, turning off the fresh air function and then determining whether or not to activate a humidification function or a dehumidification function according to the indoor air humidity S_{indoor}, so that the indoor air humidity value S_{indoor} reaches a reasonable range; therefore, the control method of the present embodiment realizes the integration of the fresh air function, the humidification functions, and the dehumidification function, which is simple and convenient control, easy to use, without the need for manual operation by the user, therefore the indoor air comfort can meet the requirements and improve the user experience.

The control method of the present embodiment could enable indoor air quality to meet the permitted standards of human comfort, the parameters affecting indoor air quality includes indoor temperature, humidity, PM2.5 concentration, formaldehyde concentration, TVOC concentration, and fresh air volume.

The fresh air structure is used to realize the fresh air function, and a purification structure is provided in the fresh air structure to purify the outdoor fresh air so that the clean fresh air enters the room. Turn on the fresh air function, that is to activate the fresh air fan, and the outdoor fresh air enters the fresh air duct. After being purified by the purification structure, it enters the air duct through the fresh air outlet and the fresh air port, and then enters the room. Turn off the fresh air function is to stop the fresh air fan. Since the air outlet of the fresh air fan 3 is directly connected to the fresh air outlet 2-2, when the fresh air fan is not working, the air in the air duct will not enter the fresh air fan 3, and thus will not flow back to the fresh air duct.

In the present embodiment, the fresh air fan includes two modes, a high wind speed mode and a low wind speed mode. The low wind speed is designed as 800r/min and the high wind speed is designed as 1800r/min. The user can set the default mode in advance.

If a parameter of indoor pollutants > a first set upper limit value > a preset permitted threshold value, the fresh air function is turned on and the fresh air fan is controlled to operate at the high wind speed mode. That is to say, when the indoor pollution exceeds the permitted standard, the fresh air fan runs at a high speed and the fresh air volume entering obviously increases.

If the preset permitted threshold value < the parameter of indoor pollutants ≤ the first set upper limit value, the fresh air function is turned on and the fresh air fan is controlled to operate at the low wind speed mode. That is to say, when the indoor pollution exceeds the permitted standard slightly, the fresh air fan runs at the low speed and the fresh air volume entering slightly increases, which can save energy.

Preferably, the fresh air function may be independently activated. A button capable of turning on or turning off the fresh air function is provided on a remote controller of the air conditioner, the operation on the button could turn on or turn off the fresh air function, which is flexible, convenient and user-friendly. If the user needs to turn on the fresh air function, the button could be pressed directly. The air conditioner indoor unit controller receives a signal sending by the remote controller and activates the fresh air function; once the button being pressed again, the air conditioner indoor unit controller receives a signal sending by the remote controller and turns off the fresh air function.

During the time period when the humidification function is turning on, a water level sensor in the water tank collects a water level signal of the water tank and sends the water level signal of the water tank to the air conditioner indoor unit controller. If the water level in the water tank is less than a preset water level, it indicates that the amount of water in the water tank could not meet the humidification requirement; the air conditioner indoor unit controller controls the first solenoid valve open and water could enter into the water tank through the water inlet pipe until the water level in the water tank amounts to the preset water level, then the air conditioner indoor unit controller controls the first solenoid close and stops filling up water in the water tank. The operation could ensure there is enough water in the water tank to satisfy the humidification requirements and enable the humidification function to be performed smoothly.

When the humidification function is turned off or the dehumidification function is turned on, the air conditioner indoor unit controller controls the second solenoid valve to open to drain out the water in the water tank through the drainage pipe to prevent the wet film from continuously absorbing water from the water tank and to increase the humidity of air.

It should be noted that the above description is not a limitation on the present invention, and the present invention is not limited to the above examples. Changes, modifications, additions or substitutions made by those skilled in the art within the scope of the present invention are not limited. It should also belong to the protection scope of the present invention.

## Claims

1. An air conditioner indoor unit, **characterized in that**, includes: a casing, a humidifying structure and a fresh air structure; an air inlet and an air outlet are formed on the casing and an air duct communicating the air inlet with the air outlet is formed within the casing; inside the air duct a fan and a heat exchanger are provided and a water receiving tray is provided below the heat exchanger;
wherein the humidifying structure including a water tank, a wet film and a water electrolysis device; wherein the water tank is placed in the water receiving tray close to the air outlet, the water tank is detachably connected to the casing; the wet film and the water electrolysis device are detachably fixed in the water tank respectively;
a fresh air port is formed on the casing and communicates with the air duct; the fresh air structure is provided at one end of the casing, which comprises: a cabinet onto which a fresh air inlet and a fresh air outlet are formed and a fresh air duct communicating the fresh air inlet and the fresh air outlet is formed within the cabinet; inside the fresh air duct a fresh air fan and a purification structure are arranged, and the fresh air outlet of the fresh air structure is connected to the fresh air port.

2. An air conditioner indoor unit according to claim 1, **characterized in that**: a first maintenance port is formed on the cabinet of the fresh air structure and a first maintenance cover plate is detachably fixed at the cabinet and configured to cover the first maintenance port; the purification structure includes a filter frame and a filter assembly; a slide rail fitted with the filter frame is formed on the cabinet, one end of the slide rail is close to the first maintenance port and the other end of the slide rail is away from the first maintenance port; a limiting hole is opened on the slide rail and a limiting ball fitted with the limiting hole is disposed at a corresponding position at the filter frame; the filter frame and the slide rail are in a sliding connection and the limiting ball is positioned within the limiting hole.

3. An air conditioner indoor unit according to claim 1, **characterized in that**: a water inlet hole is opened on the water tank; the water inlet hole is connected to a water inlet pipe; a first solenoid valve is provided on the water inlet pipe and an air conditioner indoor unit controller controls the operation of the first solenoid valve; a drainage hole is opened on a tank bottom wall of the water tank; the drainage hole is connected to the drainage pipe; a second solenoid valve is provided on the drainage pipe and the air conditioner indoor unit controller controls the operation of the second solenoid valve; a water level sensor configured to collect a water level signal of the water tank is provided within the water tank, and the water level signal is sent to the air conditioner indoor unit controller.

4. An air conditioner indoor unit control method, wherein the air conditioner indoor unit includes: a casing where an air inlet, an air outlet and a fresh air port are formed, an air duct communicating the air inlet with the air outlet is formed within the casing; a humidifying structure configured to perform a humidification function is provided at the air outlet;
a fresh air structure configured to perform a fresh air function is provided at one end of the casing, which comprises: a cabinet onto which a fresh air inlet and a fresh air outlet are formed and a fresh air duct communicating the fresh air inlet and the fresh air outlet is formed within the cabinet; inside the fresh air duct a fresh air fan and a purification structure are arranged, and the fresh air outlet of the fresh air structure is connected to the fresh air port,
**characterized in that**, the method comprises:
obtaining parameters of indoor pollutants;
determining whether each of the parameters of indoor pollutants is greater than a preset permitted threshold;
if yes, turning on a fresh air function until each of the parameters of indoor pollutants is less than or equal to the preset permitted threshold value;
if not, obtaining an indoor carbon dioxide value Q_{indoor} and an outdoor carbon dioxide value Q_{outdoo}; determining whether Q_{indoor} >Q_{outdoor} and Q_{indoor} > a permitted standard setting value Qo;
if yes, turning on a fresh air function until Q_{indoor} ≤ Q_{outdoo} or Q_{indoor} ≤ a permitted standard setting value Qo;
if not, turning off the fresh air function; obtaining indoor air humidity S_{indoor}, and determining whether or not to activate a humidification function or a dehumidification function according to the indoor air humidity S_{indoor};
if S_{indoor}< a preset humidity lower threshold, turning on a humidification function until S_{indoor} ≥ the preset humidity lower threshold, then turning off the humidification function;
if S_{indoor} > a preset humidity upper threshold, turning on a dehumidification function until S_{indoor} ≤ the preset humidity upper threshold, then turning off the dehumidification function;
if the preset humidity lower threshold ≤ S_{indoor} ≤ the preset humidity upper threshold, turning off the humidification function and dehumidification function.

5. An air conditioner indoor unit control method according to claim 4, **characterized in that**, the fresh air fan includes two modes: a high wind speed mode and a low wind speed mode; if a parameter of indoor pollutants > a first set upper limit value > the preset permitted threshold value, the fresh air function is turned on and the fresh air fan is controlled to operate at the high wind speed mode; if the preset permitted threshold value < a parameter of indoor pollutants ≤ a first set upper limit value, the fresh air fan is controlled to operate at the low wind speed mode.

6. An air conditioner indoor unit control method according to claim 4, **characterized in that**, the method further comprises: when one of the parameters of indoor pollutants is greater than the preset permitted threshold value, generating an exceeding permitted standard reminder; if within a set period of time, the number of the generation of the exceeding permitted standard reminder exceeds a preset number of times, generating a reminder to replace the purification structure.

7. An air conditioner indoor unit control method according to claim 4, **characterized in that**, the indoor carbon dioxide value is obtained by a carbon dioxide sensor arranged at the air inlet of the cabinet and the outdoor carbon dioxide value is obtained by a carbon dioxide sensor arranged on the outdoor unit of the air conditioner; a humidity sensor is arranged at the air inlet of the cabinet to obtain the indoor air humidity.

8. An air conditioner indoor unit control method according to claim 4, **characterized in that**, the parameters of indoor pollutants include a PM2.5 value, a TVOC value or a formaldehyde value which is obtained through detection by an air quality sensor arranged at the air inlet of the cabinet or received from indoor devices.

9. An air conditioner indoor unit control method according to claim 4, **characterized in that**, a button capable of turning on or turning off the fresh air function is provided on a remote controller of the air conditioner and the operation on the button turns on or turns off the fresh air function.

10. An air conditioner indoor unit control method according to claim 4, **characterized in that**, the humidifying structure comprises a water tank and a wet film, wherein the wet film is fixed in the water tank; a water inlet hole is opened on the water tank and is connected to a water inlet pipe and a first solenoid valve is arranged on the water inlet pipe; a water drainage hole is opened on the tank bottom wall of the water tank and is connected to a drainage pipe and a second solenoid valve is arranged on the water drainage pipe; a water level sensor is arranged in the water tank and is configured to collect a water level signal; during the time period when the humidification function is turning on, if the water level in the water tank is less than a preset water level, controlling the first solenoid valve open and filling up water in the water tank until the water level in the water tank amounts to the preset water level, and then closing the first solenoid; when the humidification function is turned off or the dehumidification function is turned on, controlling the second solenoid valve open and drain out the water in the water tank.
